# EUROPÄISCHE PATENTSCHRIFT

(11) **EP 3 403 270 B1**
(45) Veröffentlichungstag und Bekanntmachung des Hinweises auf die Patenterteilung: **31.03.2021**
(21) Anmeldenummer: 17705321.2
(22) Anmeldetag: 06.02.2017
(51) Int. Cl.: H01H 9/54, H01H 9/56, H01H 33/59

(54) **GLEICHSPANNUNGSSCHALTER**
DC VOLTAGE SWITCH
COMMUTATEUR POUR COURANT CONTINU

(30) Priorität: 29.02.2016 DE 102016203256
(43) Veröffentlichungstag der Anmeldung: 21.11.2018
(73) Patentinhaber: Siemens Energy Global GmbH & Co. KG, 81739 München (DE)
(72) Erfinder: RUPP, Jürgen, 91056 Erlangen (DE)
(86) Internationale Anmeldenummer: PCT/EP2017/052495
(87) Internationale Veröffentlichungsnummer: WO 2017/148651

(56) Entgegenhaltungen:
- WO-A1-2013/189524
- WO-A1-2015/110142
- DE-A1- 3 734 989
- DE-A1-102011 083 514
- DE-C- 742 715

## Beschreibung

Die Erfindung betrifft eine Anordnung umfassend einen Umrichter und einen Gleichspannungsschalter mit zwei Anschlussklemmen, zwischen denen sich ein Betriebsstrompfad mit einem mechanischen Schalter erstreckt und mit Mitteln zur Erzeugung einer Gegenspannung zu der Spannung im Betriebspfad.

Das Abschalten eines Gleichstroms (DC-Stroms) ist wegen fehlendem Nulldurchgang schwieriger als das Abschalten eines Wechselstroms (AC-Stroms). Während der Lichtbogen, der beim Öffnen der Kontakte entsteht, beim AC-Strom bei geeigneter Auslegung im nächsten Stromnulldurchgang verlischt, brennt er beim DC-Strom auch über größere Abstände bis zur Zerstörung des Schalters weiter.

Es sind verschiedene Konzepte bekannt, eine sichere Abschaltung eines DC-Stroms zu bewirken. Ein solches Konzept beruht darauf, dass ein Gegenstrom erzeugt wird, der den Laststrom kompensiert, sodass der Strom in einem mechanischen Schalter einen Nulldurchgang erfährt. Der Schalter kann dann stromlos geöffnet werden, sodass ein Lichtbogen nicht entsteht oder verlischt. Bei einem weiteren Konzept kommutiert der Strom zunächst in einen Halbleiterschalter, von dem er lichtbogenlos abgeschaltet werden kann.

Das Dokument WO 2015/110142 A1 betrifft eine Vorrichtung zum Schalten eines Gleichstroms mit einem Betriebsstrompfad, der einen mechanischen Schalter aufweist und einem zu dem Betriebsstrompfad parallelgeschalteten Abschaltstrompfad, umfassend eine Kommutierungseinrichtung, die als Transformator mit einer Speiseeinheit bestehend aus einem Umrichter und einem Kondensator ausgeführt ist. Weitere Ausgestaltungsformen von Gleichspannungsschaltern sind aus den Dokumenten WO 2013/189524 A1 und DE 742 715 C bekannt.

Aufgabe der vorliegenden Erfindung ist es, eine Anordnung Gleichspannungsschalter und einen Umrichter umfassend einen anzugeben, wobei der Gleichspannungsschalter eine verbesserte Schaltgeschwindigkeit aufweist und elektronische Komponenten eingespart werden.

Diese Aufgabe wird durch eine Anordnung mit den Merkmalen von Anspruch 1 gelöst.

Vorteilhaft wird bei dem erfindungsgemäßen Gleichspannungsschalter durch die sofort wirkende Gegenspannung der Laststrom auch im Kurzschlussfall schnell begrenzt, während er bei bestimmten bekannten Konzepten bis zum Verlöschen des Lichtbogens weiter ansteigt. Weiterhin kann durch die galvanische Trennung des Transformators das Potential auf der Sekundärseite frei gewählt werden und je nach Übersetzungsverhältnis auch die treibende Spannung. Weiterhin ist zweckmäßig kein Halbleiterschalter im Betriebsstrompfad, wodurch die elektrischen Verluste minimal gehalten werden.

Vorteilhafte Ausgestaltungen des erfindungsgemäßen Gleichspannungsschalters gehen aus den von Anspruch 1 abhängigen Ansprüchen hervor. Demgemäß können für den Gleichspannungsschalter noch zusätzlich folgende Merkmale vorgesehen werden:
- Die Spannungsquelle ist erfindungsgemäß ein Zwischenkreiskondensator eines Umrichters, der beispielsweise anderweitig mit dem Gleichspannungsnetzwerk in Beziehung steht. Hierdurch werden vorhandene Ressourcen des Aufbaus erneut verwendet und somit insgesamt eine Einsparung an Komponenten erzielt. Dabei ist die Sekundärwicklung des Transformators mit einem ihrer Anschlüsse mit einem der Wechselspannungsausgänge eines Wechselrichters des Umrichters verbunden und der andere Anschluss in die Mitte einer zusätzlichen Halbbrücke geschaltet, wobei die zusätzliche Halbbrücke parallel zur Spannungsquelle und parallel zu den weiteren Halbbrücken des Wechselrichters geschaltet ist.
- Zweckmäßig weist der mechanische Schalter eine Schaltzeit von weniger als 5 ms auf. Da der Stromnulldurchgang auf der Entladung eines Energiespeichers beruht, ist der Zeitraum, innerhalb dessen ein Stromnulldurchgang stattfindet, typischerweise auf nur wenige Millisekunden begrenzt. Innerhalb dieser kurzen Zeit muss der mechanische Schalter öffnen können, um eine sichere Unterdrückung oder Löschung des Lichtbogens zu bewirken.
- Die Vorrichtung kann derart ausgestaltet sein, dass die sekundärseitige Wicklung des Transformators kurzschließbar ist. Dazu kann beispielsweise eine mit einem

Halbleiterschalter oder einem schnellen mechanischen Schalter versehene Verbindung zwischen den Wicklungsenden der sekundärseitigen Wicklung des Transformators vorgesehen sein. Durch ein Kurzschließen der sekundärseitigen Wicklung des Transformators wird die Induktivität der primärseitigen Wicklung des Transformators auf einen sehr niedrigen Wert gesenkt und somit der Einfluss der primärseitigen Wicklung des Transformators auf die Eigenschaften des

Gleichspannungsnetzwerks vorteilhaft vermindert.
- Die Vorrichtung kann derart ausgestaltet sein, dass die Spannungsquelle in beiden Polaritäten mit der sekundärseitigen Wicklung des Transformators verbindbar ist. Beispielsweise kann die Spannungsquelle hierzu über eine Brückenschaltung aus Halbleiterschaltern mit der sekundärseitigen Wicklung des Transformators verbunden sein. Die Brücke erlaubt ein Zuschalten der Spannungsquelle in beiden Richtungen. Vorteilhaft wird hierdurch erreicht, dass eine Gegenspannung beliebiger Polarität im Betriebsstrompfad erzeugt werden kann und somit eine Abschaltung eines Gleichstroms beliebiger Flussrichtung, also bidirektional, möglich ist.
- Die Vorrichtung kann Mittel zum Abbau der induktiv im Gleichspannungsnetzwerk gespeicherten Energie aufweisen. Dazu kann beispielsweise ein Varistor parallel zum mechanischen Schalter geschaltet sein. Alternativ oder zusätzlich kann auf einer oder beiden Seiten des mechanischen Schalters eine Verbindung zwischen den Polen des Gleichspannungsnetzwerks über eine Diode und einen Varistor geschaltet werden, um Freilaufpfade für die induktiv gespeicherte Energie zu schaffen.
- Die Vorrichtung kann Mittel zur Aufnahme von Energie aus dem Betriebsstrompfad umfassen. Somit kann bei der Abschaltung beispielsweise induktiv gespeicherte Energie aus dem Gleichspannungsnetzwerk aufgenommen werden. Diese Energie kann beispielsweise in der Spannungsquelle zwischengespeichert und später wieder abgegeben werden.

Ein bevorzugtes, jedoch keinesfalls einschränkendes Ausführungsbeispiel für die Erfindung wird nunmehr anhand der Figuren der Zeichnung näher erläutert. Dabei sind die Merkmale schematisiert dargestellt und es zeigen Figur 1 einen Gleichspannungsschalter mit einem Pulsspannungsmodul gemäß der Erfindung in einem Ausschnitt aus einem Gleichspannungsnetzwerk, Figuren 2 und 3 Möglichkeiten für das Pulsspannungsmodul, die nicht zur Erfindung gehören und Beispiele darstellen, die das Verständnis der Erfindung erleichtern und Figur 4 eine erfindungsgemäße Ausführungsform für das Pulsspannungsmodul.

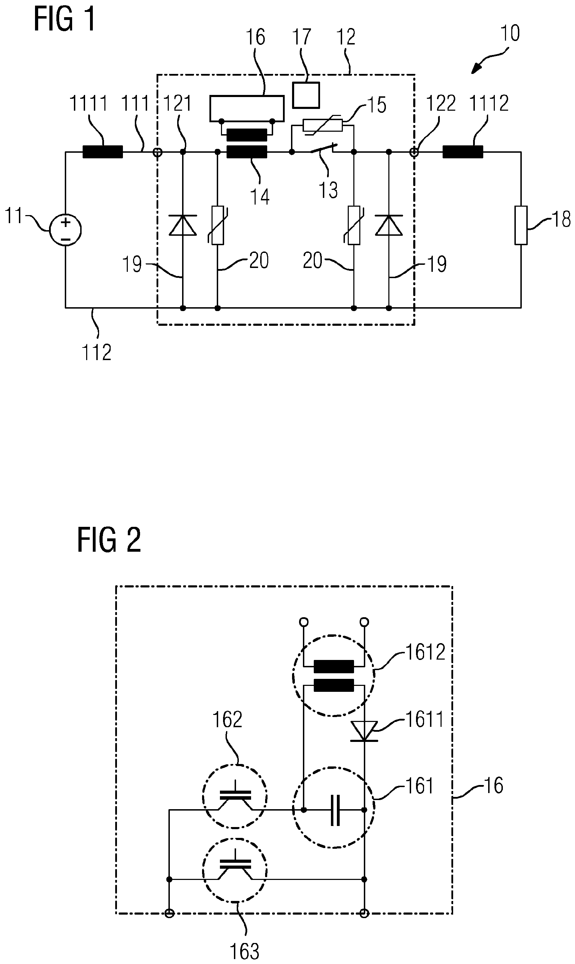

Figur 1 zeigt einen Gleichspannungsschalter 12 gemäß der Erfindung in einem Ausschnitt aus einem Gleichspannungsnetzwerk 10. Das Gleichspannungsnetzwerk 10 wird aus einer Gleichspannungsquelle 11 gespeist und somit mit einer Gleichspannung versorgt. Bei dem Gleichspannungsnetzwerk kann es sich um ein Netzwerk in der HGÜ-Stromversorgung handeln oder beispielsweise um ein Netzwerk in einem Fahrzeug, beispielsweise einer Lokomotive oder einem Triebwagen oder im Bereich der Einspeisung in ein Netzwerk für elektrisch betrieben Fahrzeuge. Grundsätzlich ist das Prinzip auf allen Spannungsebenen von Niederspannung über Mittelspannung bis zur Hochspannung anwendbar. Zwischen der Last 18, die stark vereinfachend durch einen Widerstand symbolisiert wird und der Gleichspannungsquelle 11 ist ein Gleichspannungsschalter 12 angeordnet. Der Gleichspannungsschalter 12 ist dabei mit zwei Anschlussklemmen 121, 122 seriell in einen ersten Pol 111 des Gleichspannungsnetzwerks 10 eingebunden.

Zwischen den Anschlussklemmen 121, 122 weist der Gleichspannungsschalter 12 eine Serienschaltung aus einem schnellen mechanischen Schalter 13 und der primärseitigen Wicklung eines Transformators 14 auf. Parallel zum mechanischen Schalter 13 ist ein Varistor 15 zum Abbau von Überspannungen angeordnet. Der mechanische Schalter 13 ist so ausgestaltet, dass er ein Öffnen des elektrischen Kontakts innerhalb von wenigen Millisekunden erreicht, beispielsweise innerhalb von 3 ms.

Der Varistor 15 ist dabei optional und kommt zum Einsatz, wenn die beim Schaltvorgang abzubauende induktiv gespeicherte Energie so hohe Werte annehmen kann, dass die Abschaltung zu zerstörerisch hohen Spannungen über den mechanischen Schalter 13 führt. In alternativen Ausgestaltungen für Gleichspannungsnetzwerke 10, bei denen keine so hohen Energien erwartet werden, wird der Varistor 15 weggelassen.

Als weitere Elemente, um Überspannungen abzubauen und dementsprechend Schädigungen im Gleichspannungsschalter 12 oder an sonstigen Einrichtungen im Gleichspannungsnetzwerk 10 zu vermeiden, umfasst der Gleichspannungsschalter 12 auf der der Gleichspannungsquelle 11 zugewandten Seite einen ersten Freilaufpfade 19 mit Dioden, die als Verbindung zwischen der ersten Anschlussklemme 121 bzw. der zweiten Anschlussklemme 122 und dem zweiten Pol 112 des Gleichspannungsnetzwerks 10 geschaltet sind. Weiterhin sind zweite Freilaufpfade 20 vorgesehen als Verbindung zwischen der ersten Anschlussklemme 121 bzw. der zweiten Anschlussklemme 122 und dem zweiten Pol 112 des Gleichspannungsnetzwerks 10. Die Freilaufpfade sind wiederum optional und werden dann verbaut, wenn die in Netzinduktivitäten 1111, 1112, beispielsweise Kabeln gespeicherte Energie bei schnell unterbrochenem Strom möglicherweise zu Zerstörungen führen kann.

Die sekundärseitige Wicklung des Transformators 14 ist mit einem Pulsspannungsmodul 16 verbunden, für das verschiedene Ausgestaltungen in den Figuren 2 bis 4 dargestellt sind. Das Pulsspannungsmodul 16 wie auch der mechanische Schalter 13 und ggfs. andere Elemente des Gleichspannungsschalters 12 und ggfs. auch andere Elemente des Gleichspannungsnetzwerks 10 oder der sonstigen umgebenden Schaltung werden durch eine Steuerungseinrichtung 17 angesteuert.

Durch die Wahl des Übersetzungsverhältnisses im Transformator 14 kann die nötige Spannung für den Kondensator 161 und somit die genaue Auslegung der Komponenten im Pulsspannungsmodul bestimmt werden. Dabei können die Komponenten beispielsweise für eine schnelle Abschaltung oder für geringe Baugrößen optimiert werden. Für das Windungszahlverhältnis zwischen der Primärseite und der Sekundärseite des Transformators 14 werden zweckmäßig Werte zwischen 1 und 10 verwendet.

Eine erste Möglichkeit für den Aufbau des Pulsspannungsmoduls 16, die nicht zur Erfindung gehört und ein Beispiel darstellt, das das Verständnis der Erfindung erleichtert, ist in der Figur 2 dargestellt. Das Pulsspannungsmodul 16 gemäß Figur 2 umfasst einen Kondensator 161, der als Energiespeicher für die Erzeugung eines Spannungspulses dient. Der Kondensator ist über eine gleichrichtende Diode 1611 mit der Sekundärseite eines Lade-Transformators 1612 verbunden, der wiederum auf seiner Primärseite mit einer nicht gezeigten Spannungsquelle verbunden ist. Über der Lade-Transformator 1612 wird eine Aufladung des Kondensators vorgenommen. Die nötige Kapazität des Kondensators und die Höhe der nötigen Ladespannung ergeben sich aus der Spannung des Gleichspannungsnetzwerks 10 und dem Übersetzungsverhältnis des Transformators 14. Im vorliegenden Beispiel für eine Gleichspannung im Gleichspannungsnetzwerk 10 von 700 V beträgt der Koppelfaktor des Transformators 95%, das Übersetzungsverhältnis 4 und die Hauptinduktivität 500 µH.

Der Kondensator 161 ist in Reihe zu einem Schalter 162, beispielsweise in Form eines IGBT oder anderen Halbleiterschalters geschaltet. Im normalen Betriebsfall ist der Schalter 162 abgeschaltet und somit die Verbindung zwischen Kondensator 161 und der sekundärseitigen Wicklung des Transformators 14 einseitig unterbrochen, sodass sich der Kondensator 161 nicht entladen kann. Der Kondensator ist im normalen Betriebsfall ständig geladen.

Parallel zu der Serienschaltung aus dem Kondensator 161 und dem Schalter 162 ist ein Kurzschlussschalter 163 angeordnet. Der Kurzschlussschalter 163 ist bevorzugt ebenfalls ein IGBT. Bei Niederspannungsanwendungen kann auch ein MOSFET verwendet werden. Zweckmäßig kann hier ein selbstleitender Schalter verwendet werden. Der bidirektionale Kurzschlussschalter 163 wird im normalen Betriebsfall angeschaltet und schließt die sekundärseitige Wicklung des Transformators 14 kurz. Dadurch wird bewirkt, dass die Primärseite des Transformators 14 nur eine geringe Induktivität zeigt und somit der Einfluss auf das Gleichspannungsnetzwerk 10 gering ist.

Tritt ein Kurzschluss im Gleichspannungsnetzwerk 10 auf oder ist eine Abschaltung des Gleichstroms aus einem anderen Grund erforderlich, wird der Kurzschlussschalter 163 abgeschaltet und der Schalter 162 angeschaltet. Weiterhin öffnet die Steuerungseinrichtung 17 den mechanischen Schalter 13, wobei der Öffnungsvorgang im Gegensatz zu den sehr schnellen Halbleiterschaltern 162, 163 eine gewisse Schaltzeit benötigt. Der Kondensator 161 entlädt sich daraufhin innerhalb von wenigen ms über die nun direkt verbundene Sekundärwicklung des Transformators 14. Dadurch wird im Betriebsstrompfad zwischen den Anschlussklemmen 121, 122 eine Spannung induziert, deren Richtung durch die Ladung des Kondensators 161 vorgegeben ist. Zweckmäßig ist diese der Richtung der Spannung im Gleichspannungsnetzwerk 10 entgegengerichtet. Durch diese Spannung und den damit verbundenen Stromfluss wird der Gesamtstromfluss überkompensiert und erlebt damit einen Nulldurchgang. Der dadurch bewirkte negative Stromfluss - relativ zur Stromrichtung im normalen Betrieb - durch den mechanischen Schalter 13 ist auf wenige ms Dauer begrenzt und somit passiert kurze Zeit darauf ein weiterer Stromnulldurchgang. Innerhalb dieser Zeit öffnet der mechanische Schalter 13 und ein eventuell entstehender Lichtbogen erlischt durch den Stromnulldurchgang.

Im weiteren Verlauf kann eine Schaltfähigkeit des Gleichspannungsschalters 12 wieder hergestellt werden, indem der Schalter 162 abgeschaltet wird und sodann der Kondensator 161 wieder geladen wird.

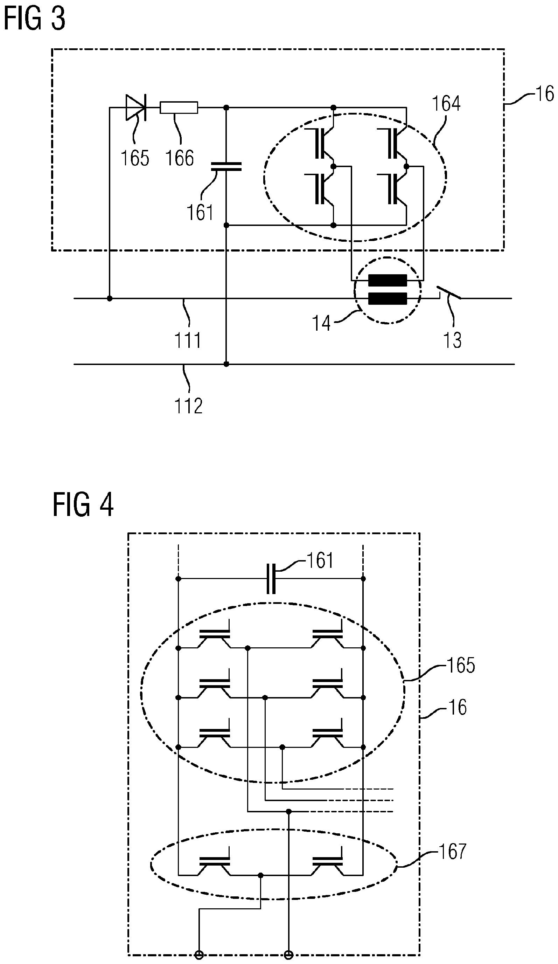

Eine weitere Ausführungsmöglichkeit für das Pulsspannungsmodul 16, die nicht zur Erfindung gehört und ein Beispiel darstellt, das das Verständnis der Erfindung erleichtert, ist in der Figur 3 dargestellt. Hierbei umfasst das Pulsspannungsmodul 16 wiederum den Kondensator 161, der aber hier anders angeschlossen ist als in der Ausführungsform der Figur 2. Im Pulsspannungsmodul 16 gemäß Figur 3 ist der Kondensator 161 über eine Brücke 164 aus IGBTs mit der Sekundärwicklung des Transformators 14 verbunden. Die Brücke 164 weist dabei in üblicher Weise zwei Serienschaltungen aus je zwei IGBTs auf, die parallel zueinander und parallel zum Kondensator 161 geschaltet sind. Die Sekundärwicklung des Transformators 14 ist zwischen die beiden Potentialpunkte geschaltet, die zwischen den beiden IGBTs jeder der Serienschaltungen liegen.

Zur Aufladung ist der Kondensator 161 in der Figur 3 mit einem Anschluss über einen hochohmigen Ladewiderstand 166 und eine Diode mit dem ersten Pol 111 des Gleichspannungsnetzes verbunden. Der andere Anschluss ist mit dem zweiten Pol 112 des Gleichspannungsnetzes verbunden. Dadurch ist im normalen Betriebsfall für eine ständige Aufladung und damit ständige Bereitschaft des Kondensators 161 zur Entladung gesorgt.

Tritt ein Kurzschluss im Gleichspannungsnetzwerk 10 auf oder ist eine Abschaltung des Gleichstroms aus einem anderen Grund erforderlich, wird nun der Kondensator 161 mit der Sekundärwicklung des Transformators 14 verbunden. Dazu wird ein Paar aus einem IGBT der einen Serienschaltung und einem IGBT der anderen Serienschaltung der Brücke 164 angeschaltet. Durch die Wahl des Paars kann der Kondenstor in einer beliebigen der zwei Polaritäten mit der Sekundärwicklung des Transformators 14 verbunden werden. Die Richtung der induzierten Spannung richtet sich nach der gewählten Polarität. Somit kann mit dem Pulsspannungsmodul 16 der Figur 3 ein Gleichstrom beider Richtungen abgeschaltet werden, d.h. der Gleichspannungsschalter 12 kann bidirektional arbeiten.

Das ist insbesondere dann vorteilhaft, wenn der Schalter in einem DC-Netz arbeitet, so dass auf beiden Seiten des Schalters Spannungsquellen angeordnet sind mit wechselnder Stromrichtung und auf beiden Seiten ein Kurzschluss entstehen kann. Wiederum wird durch die induzierte Spannung und den damit verbundenen Stromfluss der Gesamtstromfluss im mechanischen Schalter 13 überkompensiert und erlebt einen Nulldurchgang. Ein eventuell entstehender Lichtbogen erlischt dadurch.

Im Beispiel gemäß der Figur 3 ist kein Kurzschlussschalter 163 vorgesehen. Es kann vorteilhaft sein, die Sekundärwicklung des Transformators 14 nicht kurzzuschließen und eine zusätzliche Induktivität in Form der Primärwicklung des Transformators 14 im Betriebsstrompfad zu belassen, beispielsweise zur Stromglättung oder um Stromanstiege zu begrenzen.

Die erfindungsgemäße Ausführung des Pulsstrommoduls 16 ist in Figur 4 gezeigt. Hierbei umfasst das Pulsstrommodul 16 einen Teil eines Umrichters, beispielsweise einen dreiphasigen Wechselrichter 165 und den Kondensator 161, der für den Umrichter gleichzeitig den zugehörigen Zwischenkreiskondensator darstellt. Somit ist das Pulsstrommodul 16 nicht separat von anderen Komponenten beispielsweise des Gleichspannungsnetzwerks 10 aufgebaut, sondern überlappt mit diesen Komponenten wie eben einem Umrichter. Hierdurch werden vorteilhaft elektronische Komponenten eingespart.

In dem Beispiel gemäß Figur 4 ist die Sekundärwicklung des Transformators 14 mit einem ihrer Anschlüsse mit einem der Wechselspannungsausgänge des Umrichters verbunden. Der andere Anschluss ist in die Mitte einer zusätzlichen Halbbrücke 167 mit zwei IGBTs geschaltet, wobei diese zusätzliche Halbbrücke 167 parallel zum Kondensator 161 und parallel zu den weiteren Halbbrücken des Wechselrichters 165 geschaltet ist.

Die Steuerungseinrichtung 17 ist dabei zweckmäßig auch für die Steuerung des Umrichters eingerichtet, damit für den Fall der Abschaltung des Gleichstroms die Schalter des Umrichters angesteuert werden können, um zweckmäßig das normale Steuerverhalten für den Umrichter zu verlassen, da der Kondensator 161 entladen wird.

Durch den Anschluss des Transformators 14 an eine der Halbbrücken des Wechselrichters 165 und die zusätzliche Halbbrücke 167 ist auch das Pulsspannungsmodul 16 gemäß Figur 4 in der Lage, den Kondensator 161 in beiden Polaritäten mit dem Transformator 14 zu verbinden und somit eine bidirektionale Abschaltung des Stroms im Gleichspannungsnetzwerk 10 zu bewirken.

## Patentansprüche

1. Anordnung umfassend einen Gleichspannungsschalter (12) und einen Umrichter, wobei der Gleichspannungsschalter (12) zwei Anschlussklemmen (121, 122) aufweist, zwischen denen sich ein Betriebsstrompfad mit einem mechanischen Schalter (13) erstreckt und Mittel zur Erzeugung einer Gegenspannung zur Spannung im Betriebspfad aufweist, wobei die Mittel umfassen:
- einen Transformator (14), dessen Primärseite im Betriebsstrompfad in Serie zum mechanischen Schalter (13) geschaltet ist;
- eine mit der Sekundärseite des Transformators (14) verbundene Spannungsquelle (161);
- einen in Serie zur Spannungsquelle (161) geschalteten Schalter (162),
wobei die Spannungsquelle (161) ein Zwischenkreiskondensator des Umrichters ist, wobei die Sekundärwicklung des Transformators (14) mit einem ihrer Anschlüsse mit einem der Wechselspannungsausgänge eines Wechselrichters (165) des Umrichters verbunden ist und der andere Anschluss in die Mitte einer zusätzlichen Halbbrücke (167) geschaltet ist, wobei die zusätzliche Halbbrücke (167) parallel zur Spannungsquelle (161) und parallel zu den weiteren Halbbrücken des Wechselrichters (165) geschaltet ist.

2. Anordnung bei der nach Anspruch 1, der Zwischenkreiskondensator mit einer Einrichtung zum Laden des Zwischenkreiskondensators verbunden ist.

3. Anordnung nach einem der vorangehenden Ansprüche, bei der der mechanische Schalter (13) ein Schalter mit einer Schaltzeit von weniger als 5 ms ist.

4. Anordnung nach einem der vorangehenden Ansprüche mit einem Schalter (163) zum Kurzschließen der sekundärseitigen Wicklung des Transformators (14).

5. Anordnung nach einem der vorangehenden Ansprüche, derart ausgestaltet, dass die Spannungsquelle (161) in beiden Polaritäten mit der sekundärseitigen Wicklung des Transformators verbindbar ist.

6. HGÜ-Netzwerk mit einer Anordnung gemäß einem der vorangehenden Ansprüche.

7. Fahrzeug, insbesondere Schienenfahrzeug mit einer Anordnung gemäß einem der Ansprüche 1 bis 5.

## Claims

1. Arrangement comprising a DC voltage switch (12) and a converter, wherein the DC voltage switch (12) has two terminals (121, 122), between which an operating current path comprising a mechanical switch (13) extends, and has means of generating a counter voltage to the voltage in the operating path, wherein said means comprise:
- a transformer (14), the primary side of which is connected in series with the mechanical switch (13) in the operating current path;
- a voltage source (161) connected to the secondary side of the transformer (14);
- a switch (162) connected in series with the voltage source (161),
wherein the voltage source (161) is a DC-link capacitor of the converter, wherein the secondary winding of the transformer (14) is connected at one of its terminal leads to one of the AC voltage outputs of an inverter (165) of the converter and the other terminal lead is connected to the midpoint of an additional half bridge (167), wherein the additional half bridge (167) is connected in parallel with the voltage source (161) and in parallel with the other half bridges of the inverter (165).

2. Arrangement according to claim 1, wherein the DC-link capacitor is connected to a device for charging the DC-link capacitor.

3. Arrangement according to one of the preceding claims, wherein the mechanical switch (13) is a switch having a switching time of less than 5 ms.

4. Arrangement according to one of the preceding claims, having a switch (163) for short-circuiting the secondary winding of the transformer (14).

5. Arrangement according to one of the preceding claims, designed such that the voltage source (161) can be connected to the secondary winding of the transformer in both polarities.

6. HVDC network comprising an arrangement according to one of the preceding claims.

7. Vehicle, in particular a rail vehicle having an arrangement according to one of claims 1 to 5.

## Revendications

1. Montage comprenant un interrupteur ( 12 ) de courant continu et un convertisseur. L'interrupteur ( 12 ) de tension continue ayant deux bornes (121, 122) de connexion entre lesquelles s'étend un trajet de courant de fonctionnement ayant un interrupteur ( 13 ) mécanique et des moyens de production d'une tension opposée à la tension dans le trajet de fonctionnement,
dans lequel les moyens comprennent :
- un transformateur (14), dont le côté primaire est monté dans le trajet de courant de fonctionnement en série avec l'interrupteur ( 13 ) mécanique;
- une source ( 161 ) de tension connectée au côté secondaire du transformateur ( 14 );
- un interrupteur ( 162 ) monté en série avec la source ( 161 ) de tension,
dans lequel la source ( 161 ) de tension est un condensateur de circuit intermédiaire du convertisseur, l'enroulement secondaire du transformateur ( 14 ) étant relié par l'une de ses bornes à l'une des sorties de tension alternative d'un onduleur ( 165 )du convertisseur et l'autre borne étant connectée au milieu d'un demi-pont ( 167 ) supplémentaire, le demi-pont ( 167 ) supplémentaire étant monté en parallèle avec la source ( 161 ) de tension et en parallèle avec les autres demi-ponts de l'onduleur ( 165 ).

2. Montage suivant la revendication 1, dans lequel le condensateur de circuit intermédiaire est connecté à un dispositif de charge du condensateur du circuit intermédiaire.

3. Montage suivant l'une des revendications précédentes, dans lequel l'interrupteur ( 13 ) mécanique est un interrupteur ayant un temps d'interruption de moins de 5ms.

4. Montage suivant l'une des revendications précédentes, comprenant un interrupteur ( 163 )pour court-circuiter l'enroulement du côté secondaire du transformateur ( 14 ).

5. Montage suivant l'une des revendications précédentes, conformé de manière à ce que la source ( 161 ) de tension puisse être connectée en deux polarités à l'enroulement du côté secondaire du transformateur.

6. Réseau de transport de courant continu à haut tension comprenant un montage suivant l'une des revendications précédentes.

7. Véhicule, notamment véhicule ferroviaire, ayant un montage suivant l'une des revendications 1 à 5.
